# EUROPEAN PATENT APPLICATION

(11) **EP 4 269 521 A1**
(43) Date of publication of application: **01.11.2023**
(21) Application number: 22170513.0
(22) Date of filing: 28.04.2022
(51) Int. Cl.: C09J 7/29, A41D 31/32, G09F 3/10, B32B 27/28

(54) **HIGH VISIBILITY REFLECTIVE TAPE**

(71) Applicant: IRC International Reflective Company S.p.A., 41019 Soliera, (IT)
(72) Inventor: CORRADI, Lella, 41012 CARPI (IT); CORRADI, Lisa, 41012 CARPI (IT)
(74) Representative: Casadei, Giovanni

(57) **Abstract**

Thermal adhesive reflective tape, comprising:
a central strip (2), comprising a refractive surface layer (21);
a first and a second side strip (3,4), parallel and side by side with the central strip (2), which are separated or distinct from the central strip (2), namely which are detached from the central strip (2);
a support layer (5), associated with said strips (2,3,4), which keeps said strips (2,3,4) parallel and side by side to each other;
a thermal adhesive layer (6), associated with said strips (2,3,4) on a side opposite to a side on which the support layer (5) is arranged.

## Description

The present invention is a high visibility reflective tape.

In particular, the invention relates to a thermal adhesive reflective tape, applicable to work clothes to increase visibility especially in low light conditions, but not only. The tape is generally applicable to any type of clothing, but also to supports of other kind.

Various types of reflective tapes applicable to clothes are currently available. A type of particularly widespread refractive tape not designed by the Applicant, comprises three longitudinal strips, which are arranged side by side to each other. A central strip, typically grey in colour, has refractive characteristics. The central strip is flanked by two coloured, fluorescent but not reflective side stripes. The optical properties of the three strips are particularly visible from a front side of the tape, while the back side is provided with a layer of thermal adhesive material.

The tapes currently available have some drawbacks.

First of all, the three strips are made as a single piece. Once the tape has been produced, it is therefore not possible to vary the height or the characteristics of the individual strips. If, for any reason, there is a need to change the characteristics of one or more strips, it is necessary to produce a new tape.

In addition, the central strip alone is reflective and reflecting, whereas the side stripes are only fluorescent. The visibility of the tape, especially in conditions of low ambient lighting, can therefore be, in some cases, not entirely satisfactory.

The object of the present invention is to offer a thermal adhesive reflective tape that has superior characteristics compared to those of the currently available thermal adhesive reflective tapes.

An advantage of the reflective tape according to the present invention is that it allows to vary the characteristics of the individual strips, depending on the needs, without having to produce a new tape.

Another advantage of the reflective tape according to the present invention is that it has a refraction significantly higher than the currently available reflective tapes.

Additional features and advantages of the present invention will become more apparent from the detailed description that follows of an embodiment of the invention in question, illustrated by way of non-limiting example in the appended figures, in which:

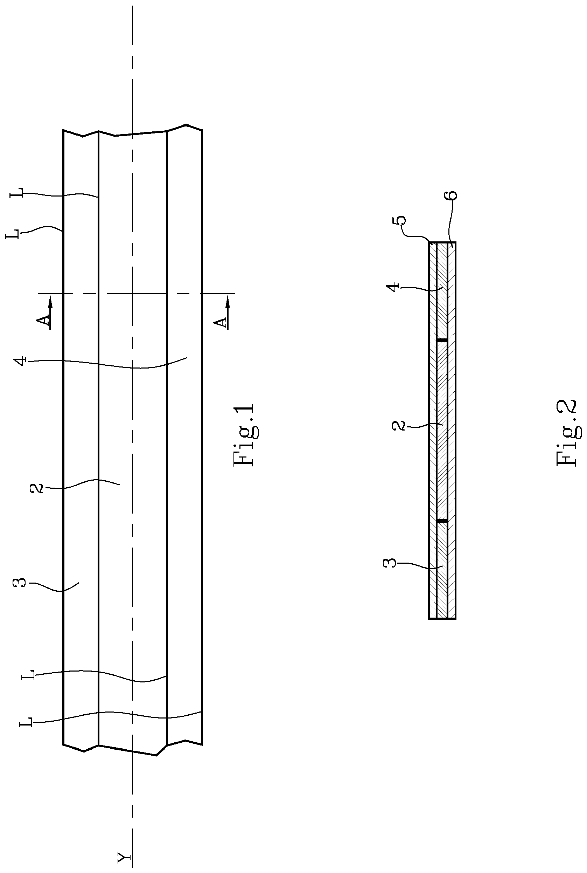

- figure 1 shows a schematic plan view of a refractive tape according to the present invention;
- figure 2 shows a sectional view according to the plane A-A of figure 1, in an enlarged scale, of the tape of figure 1;
- figure 3 shows a sectional view according to the plane A-A of figure 1, in an enlarged scale, of a second embodiment of the tape of figure 1;
- figure 4 shows a schematic plan view of a further embodiment of the tape according to the present invention.

In the following description, the term tape and the term strip are understood to indicate an object of relatively thin thickness and provided with two longitudinal sides (L) which are parallel to a longitudinal direction (Y). Tape or strip width means the distance separating the two longitudinal sides (L) Thermal adhesive refractive tape according to the present invention comprises a central strip (2), provided with a refractive surface layer (21). The refractive characteristic of the surface layer (21) can be obtained in various ways, known in the art. In a possible embodiment, the surface layer (21) comprises a plurality of microspheres of transparent material, for example glass, partially covered with a reflecting metal layer. The microspheres, in a known manner, are associated with a polymeric material support.

The tape according to the present invention further comprises a first and a second side strip (3,4), parallel and side by side with the central strip (2), which are separated or distinct from the central strip (2), namely which are detached from the central strip (2).

A support layer (5) is associated with the aforementioned strips (2,3,4), namely with the central strip (2) and the side strips (3,4). The support layer keeps said strips (2,3,4) parallel and side by side to each other. In other words, the support layer (5) keeps the three strips (2,3,4) solidly constrained.

From a production point of view, the tape according to the present invention is obtained by providing the three strips (2,3,4) independently of each other and, subsequently, by joining the three strips to the support layer (5).

The support layer (5) is made of transparent material, to allow the visibility of the strips (2,3,4).

Thanks to the fact that the three strips (2,3,4) are not made joined together, as is the case for the currently available tapes, but are independent of each other, it is possible to provide each strip (2,3,4) with particular characteristics, as well as the three strips can be combined with each other in various ways. Therefore, starting from a certain number of strips of different characteristics, it is possible to obtain as many tapes as there are possible combinations of the strips.

For example, it is possible to produce strips of different width and/or colour and surface appearance. The strips of different formats can subsequently be associated with each other, through the support layer (5), in different combinations, depending on the need. Thanks to the tape according to the present invention it is therefore possible to greatly increase the production flexibility.

In a possible embodiment, not illustrated, the side strips (3,4) comprise a refractive surface layer (31,41). This allows to increase the overall visibility of the tape, especially in low light conditions. Also in the case of the side strips (3,4), the surface layer (31,41), in a known manner, comprises metallized microspheres.

In another possible embodiment, not illustrated, the side strips (3,4) comprise a refractive and fluorescent surface layer. The fluorescence characteristic greatly increases the visibility of the side strips in daylight conditions.

The support layer (5) is applied to the surface layers (21,31,41) of the three strips.

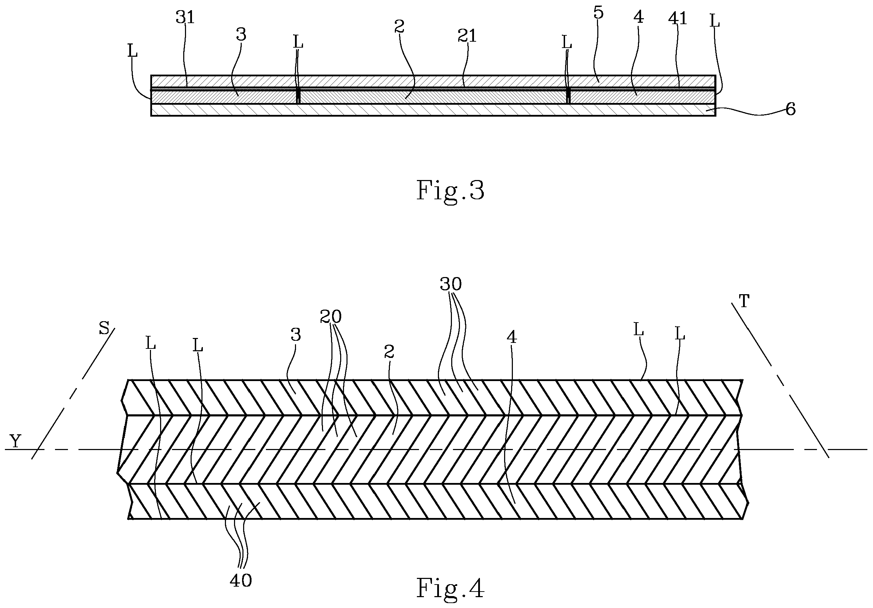

In a further possible embodiment, illustrated in Figure 4, at least one side strip (3,4) comprises a plurality of segments (30,40), which are arranged side by side to each other and separated by gaps of predetermined extent. The central strip (2) can also comprise a plurality of segments (20), which are arranged side by side to each other and separated by gaps of predetermined extent.

Preferably, the segments (30,40) are oriented parallel to a direction (T) inclined with respect to the longitudinal direction (Y) to which said strips (2,3,4) are parallel. Preferably, the segments (20) of the central strip (2) are also oriented parallel to a direction (S) inclined with respect to the longitudinal direction (Y).

The segment configuration (20,30,40) gives each strip greater visibility, in particular in the case of segments parallel to the direction (T) inclined with respect to the longitudinal direction (Y).

The tape according to the present invention comprises a thermal adhesive layer (6), which is provided to allow fixing the tape to an object or to a support, such as for example a fabric, a surface or other. By means of the thermal adhesive layer (6), the tape according to the present invention can be fixed for example to an item of clothing.

The thermal adhesive layer (6), known in the sector, is associated with the strips (2,3,4), on a side opposite to a side on which the support layer (5) is applied. With particular reference to the embodiment depicted in figure (3), the thermal adhesive layer (6) is applied to the strips (2,3,4) on the side opposite to the surface layers (21,31,41)

As already mentioned above, the tape according to the present invention can be produced by implementing a method comprising the following steps:
- providing a central strip (2) comprising a refractive surface layer (21);
- providing a first and a second side strip (3,4);
- providing a support layer (5);
- associating the central strip (2) and the side strips (3,4), which are parallel and side by side to each other, to the support layer (5). Furthermore, the method envisages applying a thermal adhesive layer (6) to the strips (2,3,4), on one side of the latter opposite to that on which the support layer (5) is applied.

As already pointed out, the three strips (2,3,4) can be made independently of each other and, subsequently, can be joined to the support layer (5) to obtain a tape with the desired characteristics. In other words, thanks to the fact that the three strips (2,3,4) are not made joined together, as is the case for the currently available tapes, but are independent of each other, it is possible to provide each strip (2,3,4) with particular characteristics, in such a way that, starting from a certain number of strips with different characteristics, it is possible to obtain as many tapes as are possible combinations of the strips themselves.

For example, it is possible to produce strips of different width and/or colour and surface appearance. The strips of different formats can subsequently be associated with each other, through the support layer (5), in different combinations, depending on the need. Thanks to the tape according to the present invention it is therefore possible to greatly increase the production flexibility.

## Claims

1. A thermal adhesive reflective tape, **characterized in that** it comprises:
a central strip (2), comprising a refractive surface layer (21);
a first and a second side strip (3,4), parallel and side by side with the central strip (2), which are separated or distinct from the central strip (2), namely which are detached from the central strip (2);
a support layer (5), associated with said strips (2,3,4), which keeps said strips (2,3,4) parallel and side by side to each other;
a thermal adhesive layer (6), associated with said strips (2,3,4) on a side opposite to a side on which the support layer (5) is arranged.

2. The tape according to claim 1, wherein the side strips (3,4) comprise a refractive surface layer (31,41).

3. The tape according to claim 1, wherein the side strips (3,4) comprise a refractive and fluorescent surface layer (31,41).

4. The tape according to one of the preceding claims, wherein at least one side strip (3,4) comprises a plurality of segments (30,40), which are arranged side by side to each other and separated by gaps of predetermined extent.

5. The tape according to claim 4, wherein said segments (30,40) are oriented parallel to a direction (T) inclined with respect to a longitudinal direction (Y) to which said strips (2,3,4) are parallel.

6. The tape according to one of the preceding claims, wherein said reflective surface layers (21,31,41) comprise a plurality of microspheres of transparent material which, on a back area, are covered with a layer of reflecting material.

7. A method for producing a thermal adhesive reflective tape, comprising the following steps:
providing a central strip (2) comprising a refractive surface layer (21);
providing a first and a second side strip (3,4);
providing a support layer (5);
associating the central strip (2) and the side strips (3,4), which are parallel and side by side to each other, to the support layer (5).

8. The method according to claim 7, comprising a step of applying a thermal adhesive layer (6) to said strips (2,3,4), on one side of the latter opposite to that on which the support layer (5) is arranged.
